# EUROPEAN PATENT APPLICATION

(11) **EP 4 395 021 A1**
(43) Date of publication of application: **03.07.2024**
(21) Application number: 22930474.6
(22) Date of filing: 09.06.2022
(51) Int. Cl.: H01M 50/109, H01M 4/06, H01M 50/466

(54) **BUTTON CELL, PREPARATION METHOD THEREFOR AND ELECTRONIC DEVICE**

(30) Priority: 08.03.2022 CN 202210220338
(71) Applicant: Eve Energy Co., Ltd., Huizhou, Guangdong 516006 (CN)
(72) Inventor: ZHENG, Zhong, Huizhou, Guangdong 516006 (CN); CAO, Lang, Huizhou, Guangdong 516006 (CN); ZHANG, Lixing, Huizhou, Guangdong 516006 (CN); DENG, Huihui, Huizhou, Guangdong 516006 (CN); SUN, Peiling, Huizhou, Guangdong 516006 (CN); ZHU, Yuan, Huizhou, Guangdong 516006 (CN)
(74) Representative: Murgitroyd & Company
(86) International application number: PCT/CN2022/097835
(87) International publication number: WO 2023/168845

(57) **Abstract**

A button battery, a manufacturing method thereof, and an electronic device are disclosed, the button battery includes a housing including a bottom cover on a side of a negative electrode sheet and a positive electrode cover on a side of a positive electrode sheet; the housing includes the positive electrode sheet, a separator, a carbon foil, and the negative electrode sheet stacked in sequence; the separator has an inverted U-shape, and both sides of the inverted U-shape are bent toward the positive electrode sheet; the button battery is filled with electrolyte. The button battery of the present application is provided with the carbon foil between the negative electrode sheet and the separator, the carbon foil can suppress a reaction of the negative electrode with electrolyte and positive electrode ions, thereby reducing the internal resistance of the button battery and the resistance of the negative electrode surface. Meanwhile, by arranging the carbon foil on the negative electrode surface, the button battery has a double-layer capacitance characteristic to shunt the current on the negative electrode surface, thereby greatly improving the performance of the button battery under high current discharge and the pulse performance at low temperature.

## Description

### TECHNICAL FIELD

Embodiments of the present application relate to a field of lithium batteries and lithium ion batteries, such as a button battery, and more particularly, to a button battery, a manufacturing method thereof, and an electronic device.

### BACKGROUND

In recent years, more and more devices use lithium batteries, and primary lithium batteries are widely used in devices with working environment temperature between -40°C and 60°C. With the improvement of the function and the lightweight design of the device, higher requirements are put forward for high-output lithium batteries. For example, in the application fields such as electronic tag or keyless entry, devices need large current when emitting radio waves, and the lithium batteries are required to work normally at a low temperature of about -40°C in kinds of devices.

Primary lithium battery mainly includes: (1) positive electrode, that is, positive electrode active material including metal oxides, such as manganese dioxide (MnO₂), graphite fluoride ((CFₓ)ₙ), iron sulfide (FeS₂) and thionyl chloride (SOCl₂); (2) negative electrode, including lithium or lithium alloy; (3) separator and non-aqueous electrolyte. Among them, the button battery with manganese dioxide as the positive active material is called lithium manganese dioxide battery, which is widely used because of its good discharge characteristics. Furthermore, the manganese dioxide is an easily available material.

CN 101816087A discloses a primary alkaline battery, which is provided with a positive electrode containing positive electrode active material and graphite, a negative electrode containing negative electrode active material, a separator and an alkaline electrolyte, wherein the positive electrode active material contains manganese dioxide, the alkaline electrolyte contains zinc oxide, and the positive electrode contains metatitanic acid. Therefore, for a battery containing zinc oxide (ZnO) in an alkaline electrolyte, the generation of zinc hausmannite and the like at the positive electrode can be suppressed, meanwhile the precipitation of titanium compounds and ZnO on the inner surface of the battery case can be suppressed, so that good discharge performance and storage characteristics are obtained.

However, on the negative electrode surface of lithium manganese dioxide battery, active lithium reacts with components contained in non-aqueous electrolyte, thus generating gas or forming a coating film with high resistance or insulative components. Moreover, in a button battery with manganese dioxide or graphite fluoride as the positive active material, a part of the active material is dissolved in a non-aqueous electrolyte, manganese ions or fluoride ions are generated in the battery, the generated ions react with the negative lithium sheet to generate high-impedance components, and a coating film containing the components is formed on the negative electrode surface, thereby increasing the internal resistance of the battery. Therefore, the lithium battery is damaged by the above reaction, or the resistance of the battery may increase, which may weaken the discharge characteristics of the lithium battery.

Especially when manganese dioxide is used as the cathode active material, with the progress of discharge, the desorption of manganese ions from the positive active material gradually increases. Therefore, if the battery is stored in a certain degree of discharge, a large number of high-resistance elements is generated on the negative electrode surface of the lithium battery, which greatly increases the internal resistance of the lithium battery and the negative electrode surface. Therefore, when the battery is restored to use, the discharge characteristics is significantly reduced in spite of remaining the capacity of the battery. In particular, the high-current discharge characteristics and pulse discharge characteristics of lithium batteries at low temperature are obviously reduced, as a result, the batteries cannot discharge at high current.

Based on the above research, it is necessary to provide a button battery, which is a primary lithium battery. The button battery can inhibit the reaction of the negative electrode surface with electrolyte components and positive ions, thus reducing the generation of high-resistance products in the battery, ultimately reducing the internal resistance of the battery and the resistance of the negative electrode surface, and greatly improving the pulse ability of the battery at low temperature.

### SUMMARY

The following is a summary of the subject matter described in detail herein. This summary is not intended to limit the scope of the claims.

The embodiments of the present application provide a button battery, a manufacturing method thereof and an electronic device, and more particularly, relates to a lithium manganese dioxide button battery, and a manufacturing method and an application thereof. The button battery has a double-layer capacitance characteristic, thereby a performance of the battery at a high current discharge and a pulse capability at a low temperature is greatly improved. The battery assembly process is simple and convenient, and can be applied to a pseudo-capacitance supercapacitor made of MnO₂/ carbon material to have the parallel effect with the original MnO₂/Li lithium manganese battery to form a lithium manganese battery supercapacitor.

According to a first aspect, the embodiments of the present application provide a button battery including a housing with a bottom cover on a side of a negative electrode sheet and a positive electrode cover on a side of a positive electrode sheet;
the housing includes a positive electrode sheet, a separator, a carbon foil, and a negative electrode sheet stacked in sequence;
the separator has an inverted U-shape, and both sides of the inverted U-shape are bent toward the positive electrode sheet;
the button battery is filled with electrolyte.

According to the button battery provided in the present invention, the carbon foil is provided between the negative electrode sheet and the separator, and the carbon foil serves as a self-supporting carbon layer, so that the reaction of the negative electrode with the electrolyte and the positive electrode ion can be suppressed, thereby reducing the internal resistance of the button battery and the resistance of the negative electrode surface; meanwhile, by arranging the carbon foil on the negative electrode surface, the button battery has a double-layer capacitance characteristic to shunt the current on the negative electrode surface, as such, the performance of the button battery under high current discharge and the pulse performance at low temperature are greatly improved.

Preferably, the carbon foil and the negative electrode sheet is in a thickness ratio of (0.08-0.60): 1, which may be, for example, 0.08: 1, 0.1:1, 0.2:1, 0.25:1, 0.4:1 or 0.60:1, but is not limited to the numerical values enumerated, and other numerical values not enumerated within the numerical range are equally applicable, preferably (0.08-0.25): 1.

Preferably, the carbon foil and the negative electrode sheet is in a diameter ratio of (0.125-1.05): 1, which may be, for example, 0.125:1, 0.3:1, 0.5:1, 0.8:1 or 1.05:1, but is not limited to the numerical values enumerated, and other numerical values not enumerated within the numerical ranges are equally applicable, preferably (0.50-1.05): 1.

The carbon foil and the negative electrode sheet are circular or quasi-circular, and the diameter ratio of the carbon foil and the negative electrode sheet is within a reasonable range, so that most/all of the surface of the negative electrode sheet is prevented from reacting with the electrolyte or the positive electrode ions.

Preferably, an orthographic projection of the center of the carbon foil coincides with an orthographic projection of a center of the negative electrode sheet along a direction perpendicular to the button battery.

Preferably, an orthographic projection of the center of the negative electrode sheet coincides with an orthographic projection of a center of the bottom cover along a direction perpendicular to the button battery.

Preferably, the bottom cover is provided with a seal ring, which is provided at the edge snap position for jointing the bottom cover and the positive electrode cover.

Preferably, a number of layers of the separator is 1 or more, for example, 1 layer, 2 layers, 3 layers, or 4 layers, but is not limited to the numerical values enumerated, and other positive integer values not enumerated within the numerical range are equally applicable, preferably 2 layers.

Preferably, the negative electrode sheet includes a lithium negative electrode sheet.

Preferably, the positive electrode sheet includes a manganese dioxide positive electrode sheet.

The positive electrode sheet of the present application is a manganese dioxide positive electrode sheet, and the negative electrode sheet is a lithium sheet, that is, the button battery is a lithium manganese dioxide battery. Since the button battery has a double-layer capacitance characteristic, the button battery is applied to a pseudo-capacitor supercapacitor of MnO₂/carbon material, and has a parallel effect with an original MnO₂/Li lithium manganese battery to form a lithium manganese battery supercapacitor.

In a second aspect, the embodiments of the present application provide a manufacturing method of a button battery according to the first aspect, the manufacturing method includes:
placing the negative electrode sheet, the carbon foil, and the separator sequentially in the bottom cover; injecting an electrolyte into the bottom cover; placing the positive electrode sheet into the bottom cover; and sealing the bottom cover by the positive electrode cover to obtain the button battery;
the carbon foil is obtained by mixing a carbon material with a binder and extruding a mixture into a sheet.

In the present application, a negative electrode surface treatment method in which a carbon foil is provided on a side of a negative electrode sheet is used to improve high-pulse performance of a battery at low temperature; the carbon foil is directly extruded into a sheet by roll-forming of a carbon material and an adhesive, to provide both self-supporting structure and carbon material characteristic, and excellent flexibility and shear property, and to perfectly matched with an original separator cutting die, so that the self-supporting carbon foil and the negative electrode sheet can be directly tightly inlaid and adhered. Moreover, in the manufacturing process, no additional material should be added to support the carbon material, and the carbon material can directly form a self-supporting carbon structure by rolling, and no organic solvent such as water, ethanol, or NMP is used, so that the possibility of affecting the battery performance due to side reaction between the residual solvent and the negative electrode sheet is reduced, and the step of baking the carbon foil to remove the organic solvent is reduced, thereby the safety of the battery manufacturing process is improved. Moreover, the assembly process of the button battery of the present application is simple and convenient.

Preferably, orthographic projections of the centers of the negative electrode sheet, the carbon foil, the separator and the positive electrode sheet coincides with an orthographic projection of a center of the bottom cover along a direction perpendicular to the button battery.

Preferably, the extrusion frequency of the extruding the mixture into the sheet ranges from30 Hz to 50 Hz, which may be, for example, 30Hz, 35Hz, 40Hz, 45Hz or 50 Hz, but is not limited to the numerical values enumerated, and other numerical values not enumerated within the numerical range are equally applicable.

Preferably, the extrusion temperature of the extruding the mixture into the sheet ranges from 30°C to 60°C, for example, 30°C, 35°C, 40°C, 45°C, 50°C, 55°C or 60°C.

The manufacturing process of the carbon foil described in the present application only needs a roller compactor, and the obtained product can be directly fed into the battery manufacturing process as a raw material.

Preferably, a revolution speed of the mixing ranges from 20 r/min-30 r/min, which may be, for example, 20r/min, 22r/min, 24r/min, 26r/min, 28r/min or 30r/min, but is not limited to the numerical values enumerated, and other numerical values not enumerated within the numerical range are equally applicable.

Preferably, a rotational speed of the mixing ranges from 1500 r/min to 2000 r/min, which may be, for example, 1500r/min, 1600r/min, 1700r/min, 1800r/min, 1900r/min or 2000r/min, but is not limited to the numerical values enumerated, and other numerical values not enumerated within the numerical range are equally applicable.

Preferably, the mixing sequence includes premixing the carbon material for 3 min to 5 min, and adding the binder and mixing for 5 min to 7 min.

The carbon material is premixed for 3 min to 5 min, which may be, for example, 3 min, 3.5 min, 4 min, 4.5min or 5 min, but is not limited to the numerical values recited, and other numerical values not recited within the numerical range are equally applicable.

The adding binder and mixing for 5 to 7 min may be, for example, 5 min, 5.5 min, 6 min, 6.5min, or 7 min, but is not limited to the numerical values listed, and other numerical values not listed within the numerical range are also applicable.

Preferably, the carbon material and the binder have a mass ratio of 1: (0.01 to 0.1), which may be, for example, 1:0.01, 1:0.03, 1:0.05, 1:0.07, 1:0.09 or 1:0.1, but is not limited to the numerical values enumerated, and other numerical values not enumerated within the numerical ranges are equally applicable.

Preferably, the carbon material includes any one of or a combination of at least two of graphite, acetylene black, Ketjen black, or activated carbon, typical but non-limiting combinations include combinations of graphite and acetylene black, combinations of graphite and Ketjen black, combinations of acetylene black and Ketjen black, or combinations of Ketjen black and activated carbon.

Preferably, the binder includes a combination of any one or at least two of a polyvinylidene fluoride emulsion, a polytetrafluoroethylene or sodium carboxymethylcellulose, typical but non-limiting combinations include a combination of a polyvinylidene fluoride emulsion and a polytetrafluoroethylene, a combination of a polyvinylidene fluoride emulsion and sodium carboxymethylcellulose, or a combination of a polytetrafluoroethylene and sodium carboxymethylcellulose.

Preferably, a method of setting the negative electrode sheet includes: covering a surface of the negative electrode sheet with a layer of polyethylene film, and forming the negative electrode sheet from a square to a circle and placing the negative electrode sheet in the bottom cover, and removing the polyethylene film.

Preferably, the positive electrode sheet is obtained by primary drying, pressure molding and secondary drying of positive electrode slurry.

Preferably, a temperature of the primary drying is 170 °C to 190 °C, which may be, for example, 170°C, 175°C, 180°C, 185°C or 190°C, but is not limited to the numerical values enumerated, and other numerical values not enumerated within the numerical ranges are equally applicable.

Preferably, a duration of the primary drying is 10 h to 14 h, which may be, for example, 10 h, 11 h, 12 h, 13 h, or 14 h, but is not limited to the numerical values enumerated, and other numerical values not enumerated within the numerical range are equally applicable.

Preferably, a temperature of the secondary drying is 200 °C to 220 °C, which may be, for example, 200°C, 205 °C, 210 °C, 215 °C or 220 °C, but is not limited to the numerical values enumerated, and other numerical values not enumerated within the numerical ranges are equally applicable.

Preferably, a duration of the secondary drying is 10 h to 14 h, which may be, for example, 10 h, 11 h, 12 h, 13 h, or 14 h, but is not limited to the numerical values enumerated, and other numerical values not enumerated within the numerical range are equally applicable.

Preferably, the positive electrode slurry includes manganese dioxide, a binder material, and a conductive material.

As a preferred technical solution of the manufacturing method of the button battery according to the present application, the manufacturing method includes the following steps:
placing the negative electrode sheet, the carbon foil, and the separator sequentially in the bottom cover, injecting the electrolyte into the bottom cover, placing the positive electrode sheet in the bottom cover, and sealing the bottom cover by the positive electrode cover to obtain the button battery;
the carbon foil is obtained by mixing a carbon material and a binder in a mass ratio of 1: (0.01 to 0.1) at a revolution speed ranging from20 r/min to 30 r/min and a rotation speed ranging from1500 r/min to 2000 r/min, and extruding a mixture into a sheet at an extrusion frequency ranging from 30 Hz to 50 Hz and an extrusion temperature ranging from 30°C to 60°C; a mixing sequence includes premixing the carbon material for 3 min to 5 min first, and adding the binder and mixing for 5 min to 7 min;
an orthographic projection of centers of the negative electrode sheet, the carbon foil, the separator, and the positive electrode sheet coincides with an orthographic projection of a center of the bottom cover along a direction perpendicular to the button battery;
a method of setting the negative electrode sheet includes: covering a surface of the negative electrode sheet with a layer of polyethylene film, and then forming the negative electrode sheet from a square to a circle and placing the negative electrode sheet in the bottom cover, and removing the polyethylene film;
the positive electrode sheet is obtained by primary drying of the positive electrode slurry at a temperature ranging from 170°C to 190°C for 10 h to 14 h, pressure forming, and secondary drying at a temperature ranging from 200°C to 220°C for 10 h to 14 h, and the positive electrode slurry includes manganese dioxide, bonding material and conductive material.

In a third aspect, the embodiments of the present application provide an electronic device including the button battery according to the first aspect.

Other aspects will become apparent upon reading and understanding the drawings and the detailed description.

### BRIEF DESCRIPTION OF THE DRAWINGS

The drawings are used to provide a further understanding of the technical solution herein, and constitute a part of the specification, and together with the embodiment of the application, serve to explain the technical solution herein, and do not constitute a limitation on the technical solution herein.
FIG. 1 is a schematic structural diagram of a button battery according to Embodiment 1;
FIG.2 is a continuous pulse discharge test diagram of the button batteries of Embodiments 1 to 6, Comparative Embodiment 1 and Comparative Embodiment 2 at temperature of -40°C;
1 - seal ring, 2 - bottom cover, 3 - negative sheet, 4 - positive electrode cover, 5 - positive sheet, 6 - separator, and 7 - carbon foil.

### DETAILED DESCRIPTION OF THE EMBODIMENTS

The technical solution of the present application will be further explained by the detailed description. Those skilled in the art should be understand that the embodiments are merely illustrative of the present application and should not be construed as limiting the particular application.

The following embodiments and the comparative embodiments are button batteries of CR2032HT having a diameter of 20 mm and a thickness of 3.2 mm, wherein the positive electrode sheet has a diameter of 15.04 mm and a thickness of 1.84 mm; the negative electrode sheet has a diameter of 16 mm and a thickness of 0.6 mm; the separator is a PS01 separator, and the electrolyte is lithium perchlorate non-aqueous electrolyte of 0.25 g;
the above description of the button battery is merely intended to more fully illustrate the technical solution of the present application, and should not be construed as a specific limitation of the present application.

### Embodiment 1

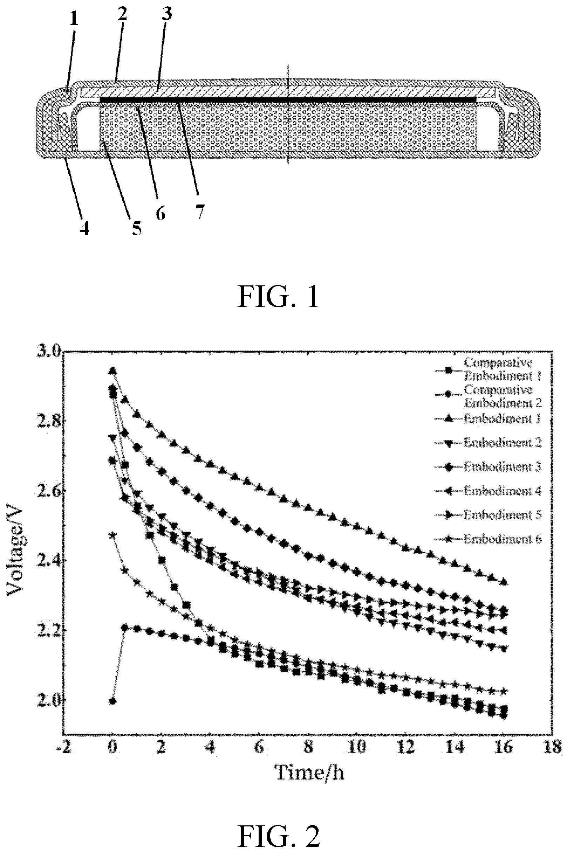

This embodiment provides a button battery including a housing as shown in FIG. 1, the house includes a bottom cover 2 on a side of a negative electrode sheet 3 and a positive pole cover 4 on a side of a positive electrode sheet 5, and the housing includes a positive electrode sheet 5, a separator 6, a carbon foil 7, and a negative electrode sheet 3 stacked in sequence; the separator 6 has an inverted U-shape, and both sides of the inverted U-shape are bent toward the positive electrode sheet 5, and the button battery is filled with an electrolyte;
an orthographic projection of the center of the carbon foil 7 coincides with an orthographic projection of the center of the negative electrode sheet 3 along a direction perpendicular to the button battery, and an orthographic projection of the center of the negative electrode sheet 3 coincides with an orthographic projection of the center of the bottom cover 2 along the direction perpendicular to the button battery; the carbon foil 7 and the negative electrode sheet 3 have a thickness ratio of 0.15:1, and the carbon foil 7 and the negative electrode sheet 3 have a diameter ratio of 0.9:1;
the bottom cover 2 is provided with a sealing ring 1, which is provided at the edge snap position for jointing the bottom cover 2 and the positive electrode cover 4; the negative electrode sheet 3 is a lithium sheet, and the positive electrode sheet 5 is a manganese dioxide positive electrode sheet 5; the separator 6 has two layers; and
the manufacturing method of the button battery includes:
placing the negative electrode sheet 3, the carbon foil 7 and the separator 6 sequentially in the bottom cover 2, injecting the electrolyte into the bottom cover 2, placing the positive electrode sheet 5 in the bottom cover 2, and sealing the bottom cover 2 by the positive electrode cover 4 to obtain the button battery; where orthographic projections of the centers of the negative electrode sheet 3, the carbon foil 7, the separator 6 and the positive electrode sheet 5 coincide with an orthographic projection of a center of the bottom cover 2 along the direction perpendicular to the button battery;
the carbon foil 7 is obtained by mixing acetylene black and polytetrafluoroethylene with a mass ratio of 1:0.05 at a revolution speed of 25 r/min and a rotation speed of 1800 r/min, and extruding the mixture into a sheet at an extrusion frequency of 40 Hz and an extrusion temperature of 45°C; where the mixing includes premixing the acetylene black for 4 min and adding the polytetrafluoroethylene and mixing for 6 min;
a method of setting the negative electrode sheet 3 includes: covering a surface of the negative electrode sheet 3 with a layer of polyethylene film, forming the negative electrode sheet from a square to a circle and placing the negative electrode sheet in the bottom cover 2, and removing the polyethylene film;
the manufacturing of positive electrode sheet 5 includes: mixing manganese dioxide, graphite carbon black and a polytetrafluoroethylene emulsion with a solid content of 35% in a mass ratio of 100:5: 16 to obtain a positive electrode slurry, primary drying the positive electrode slurry at temperature of 180°C for 12 h, then press-molding the positive electrode slurry with a die and a hydraulic press, and drying the positive electrode slurry at temperature of 200°C for 12 h to obtain the positive electrode sheet 5;
the continuous pulse discharge test diagram of the button battery of this embodiment at temperature of -40°C is shown in Figure 2.

### Embodiment 2

This embodiment provides a button battery including a housing, the housing includes a bottom cover on a side of a negative electrode sheet and a positive electrode cover on a side of a positive electrode sheet; the housing includes a positive electrode sheet, a separator, a carbon foil, and a negative electrode sheet stacked in sequence; the separator has an inverted U-shape, and both sides of the inverted U-shape are bent toward the positive electrode sheet; the button battery is filled with an electrolyte;
an orthographic projection of the center of the carbon foil coincides with an orthographic projection of the center of the negative electrode sheet along a direction perpendicular to the button battery, and an orthographic projection of the center of the negative electrode sheet coincides with an orthographic projection of the center of the bottom cover along the direction perpendicular to the button battery; the carbon foil and the negative electrode sheet have a thickness ratio of 0.08:1, and the carbon foil and the negative electrode sheet have a diameter ratio of 0.5:1;
the bottom cover is provided with a sealing ring, and the sealing ring is provided at an edge snap position for jointing the bottom cover and the positive electrode cover; the negative electrode sheet is a lithium sheet, and the positive electrode sheet is a manganese dioxide positive electrode sheet; the separator has two layers; and
the manufacturing method of the button battery includes:
placing the negative electrode sheet, the carbon foil, and the separator sequentially in a bottom cover, injecting the electrolyte into the bottom cover, placing the positive electrode sheet into the bottom cover; and sealing the bottom cover by the positive electrode cover to obtain the button battery; orthographic projections of centers of the negative electrode sheet, the carbon foil, the separator, and the positive electrode sheet coincide with an orthographic projection of a center of the bottom cover along a direction perpendicular to the button battery;
the carbon foil is obtained by mixing graphite and sodium carboxymethyl cellulose in a mass ratio of 1:0.01 at a revolution speed of 20r/min and a rotation speed of 2000r/min, and extruding into a sheet at an extrusion frequency of 30Hz and an extrusion temperature of 60°C; a mixing sequence comprises premixing the carbon material for 3 min to 5 min, and adding the binder and mixing for 5 min to 7 min.

A method of setting the negative electrode sheet comprises: covering a surface of the negative electrode sheet with a layer of polyethylene film, and forming the negative electrode sheet from a square to a circle and placing the negative electrode sheet in the bottom cover, and removing the polyethylene film;
the manufacturing of positive electrode sheet 5 comprises: mixing manganese dioxide, graphite carbon black and a polytetrafluoroethylene emulsion with a solid content of 35% in a mass ratio of 100:5: 16 to obtain a positive electrode slurry, primary drying the positive electrode slurry at temperature of 170°C for 14 h, then press-molding the positive electrode slurry with a die and a hydraulic press, and drying the positive electrode slurry at temperature of 220°C for 10 h to obtain the positive electrode sheet 5;
the continuous pulse discharge test diagram of the button battery of this embodiment at temperature of -40°C as shown in Figure 2.

### Embodiment 3

This embodiment provides a button battery including a housing, the housing includes a bottom cover on a side of a negative electrode sheet and a positive electrode cover on a side of a positive electrode sheet; the housing includes a positive electrode sheet, a separator, a carbon foil, and a negative electrode sheet stacked in sequence; the separator has an inverted U-shape, and both sides of the inverted U-shape are bent toward the positive electrode sheet; the button battery is filled with an electrolyte;
an orthographic projection of the center of the carbon foil coincides with an orthographic projection of the center of the negative electrode sheet along a direction perpendicular to the button battery, and an orthographic projection of the center of the negative electrode sheet coincides with an orthographic projection of the center of the bottom cover along a direction perpendicular to the button battery; the carbon foil and the negative electrode sheet have a thickness ratio of 0.25:1, and the carbon foil and the negative electrode sheet have a diameter ratio of 1.05: 1;
the bottom cover is provided with a sealing ring, and the sealing ring is provided at an edge snap position for jointing the bottom cover and the positive electrode cover; the negative electrode sheet is a lithium sheet, and the positive electrode sheet is a manganese dioxide positive electrode sheet; the separator has two layers;
the manufacturing method of the button battery includes the steps of:
placing the negative electrode sheet, the carbon foil, and the separator sequentially in a bottom cover, injecting the electrolyte into the bottom cover, placing the positive electrode sheet into the bottom cover; and sealing the bottom cover by the positive electrode cover to obtain the button battery; orthographic projections of centers of the negative electrode sheet, the carbon foil, the separator, and the positive electrode sheet coincide with an orthographic projection of a center of the bottom cover along a direction perpendicular to the button battery;
the carbon foil is obtained by extruding the mixture of the Ketjen black and the polytetrafluoroethylene in a mass ratio of 1 :0.1 at a revolution speed of 30r/min and a rotation speed of 1500r/min into a sheet at an extrusion frequency of 50 Hz and an extrusion temperature of 30°C; the mixing sequence includes premixing the acetylene black for 5 min and t adding the polytetrafluoroethylene and mixing for 5 min;
a method of setting the negative electrode sheet comprises: covering a surface of the negative electrode sheet with a layer of polyethylene film, and forming the negative electrode sheet from a square to a circle and placing the negative electrode sheet in the bottom cover, and removing the polyethylene film;
the manufacturing of positive electrode sheet comprises: mixing manganese dioxide, graphite carbon black and a polytetrafluoroethylene emulsion with a solid content of 35% in a mass ratio of 100:5:16 to obtain a positive electrode slurry, primary drying the positive electrode slurry at temperature of 190°C for 10 h, then press-molding the positive electrode slurry with a die and a hydraulic press, and drying the positive electrode slurry at temperature of 200°C for 14 h to obtain the positive electrode sheet;
the continuous pulse discharge test diagram of the button battery of this embodiment at temperature of -40°C as shown in Figure 2.

### Embodiment 4

This embodiment provides a button battery, which differs from Embodiment 1 only in that the carbon foil and the negative electrode sheet have a thickness ratio of 0.06:1, and the rest is the same as Embodiment 1;
the continuous pulse discharge test diagram of the button battery of this embodiment at temperature of -40°C as shown in Figure 2;
the manufacturing method of the button battery is the same as in Embodiment 1.

### Embodiment 5

This embodiment provides a button battery, which differs from Embodiment 1 only in that the carbon foil and the negative electrode sheet have a thickness ratio of 0.27:1, and the rest is the same as Embodiment 1;
the continuous pulse discharge test diagram of the button battery of this embodiment at temperature of -40°C as shown in Figure 2;
the manufacturing method of the button battery is the same as in Embodiment 1.

### Embodiment 6

This embodiment provides a button battery, which differs from Embodiment 1 only in that the carbon foil and the negative electrode sheet have a diameter ratio of 0.4:1, and the remainder is the same as Embodiment 1;
the continuous pulse discharge test diagram of the button battery of this embodiment at temperature of -40°C as shown in Figure 2;

The manufacturing method of the button battery is the same as in Embodiment 1.

### Embodiment 7

This embodiment provides a button battery, which differs from Embodiment 1 only in that the carbon foil and the negative electrode sheet have a diameter ratio of 1.1:1, and the remainder is the same as Embodiment 1;

The manufacturing method of the button battery is the same as in Embodiment 1.

### Embodiment 8

This embodiment provides a button battery, which differs from Embodiment 1 only in that the number of layers of the separator is one, and the remaining layers are the same as Embodiment 1;

The manufacturing method of the button battery is the same as in Embodiment 1.

### Embodiment 9

This embodiment provides a button battery, which differs from Embodiment 1 only in that the number of layers of the separator is three, and the remaining layers are the same as Embodiment 1;

The manufacturing method of the button battery is the same as in Embodiment 1.

### Comparative Embodiment 1

The present comparative embodiment provides a button battery including a housing, the housing includes a bottom cover on a side of a negative electrode sheet and a positive electrode cover on a side of a positive electrode sheet; the housing includes a positive electrode sheet, a separator, a carbon material layer, a non-woven fabric layer, and a negative electrode sheet stacked in sequence; the separator has a disc shape; the bottom cover is filled with an electrolyte;
the non-woven fabric layer is a polypropylene layer, an orthographic projection of the center of the non-woven fabric layer coincides with an orthographic projection of the center of the negative electrode sheet along a direction perpendicular to the button battery, and an orthographic projection of the center of the negative electrode sheet coincides with an orthographic projection of the center of the bottom cover along the direction perpendicular to the button battery; the carbon material layer, the non-woven fabric layer and the negative electrode sheet have a thickness ratio of 0.056:0.089:1, and the non-woven fabric layer and the negative electrode sheet have a diameter ratio of 1.15:1; the non-woven fabric layer has a thickness of 80 µm and a diameter of 15 mm;
the bottom cover is provided with a sealing ring provided at the edge snap position for jointing the bottom cover and the positive electrode cover; the negative electrode sheet is a lithium sheet, and the positive electrode sheet is a manganese dioxide positive electrode sheet; the separator has two layers;
the manufacturing method of the button battery includes:
   coating a carbon material layer slurry on a non-woven fabric layer, vacuum drying at temperature of 25°C for one day to obtain a composite layer of the carbon material layer and the non-woven fabric layer, cutting and perforating the composite layer into a disc shape with a diameter of 15 mm, sequentially placing a negative electrode sheet and the composite layer in a bottom cover, placing a separator, injecting an electrolyte solution, placing the positive electrode sheet in the bottom cover, and sealing the bottom cover with the positive electrode cover to obtain a button battery; orthographic projections of centers of the negative electrode sheet, the carbon material layer, the non-woven fabric layer, the separator, and the positive electrode sheet coincide with an orthographic projections of the center of the bottom cover along the direction perpendicular to the button battery;
   the manufacturing method of the carbon material layer includes: mixing ethanol and acetylene black for 4 minutes, adding water and polyacrylic acid and mixing for 6 minutes, coating an obtained carbon material layer slurry on the non-woven fabric, and vacuum drying at temperature of 25°C for one day to obtain a composite layer of the carbon material layer and the non-woven fabric layer; the acetylene black and the polyacrylic acid have a mass ratio of 1:0.5, the revolution speed of the mixing is 25r/min, and the rotational speed is 1800r/min;
   a method of setting the negative electrode sheet includes: covering a surface of the negative electrode sheet with a layer of polyethylene film, and forming the negative electrode sheet from a square to a circle and placing the negative electrode sheet in the bottom cover, and removing the polyethylene film;
   the manufacturing of positive electrode sheet includes: mixing manganese dioxide, graphite carbon black and a polytetrafluoroethylene emulsion with a solid content of 35% in a mass ratio of 100:5:16 to obtain a positive electrode slurry, primary drying the positive electrode slurry at temperature of 180°C for 12 h, then press-molding the positive electrode slurry with a die and a hydraulic press, and drying the positive electrode slurry at temperature of 200°C for 12 h to obtain the positive electrode sheet;
   the continuous pulse discharge test diagram of the button battery of this comparative embodiment at temperature of -40°C as shown in Figure 2.

### Comparative Embodiment 2

This comparative embodiment provides a button battery, which differs from Embodiment 1 only in that no carbon foil is provided, and the rest is the same as Embodiment 1;
the manufacturing method of the button battery is the same as in Embodiment 1 except that no carbon foil is provided;
the continuous pulse discharge test diagram of the button battery of this comparative embodiment at temperature of -40°C as shown in Figure 2.

The button batteries obtained in the above embodiments and the comparative embodiments are subjected to a pulse test at temperature of -40°C, the pulse test method including: (1) placing a button battery obtained in an above embodiment in a low temperature chamber at temperature of -40°C for 4 h; (2) recording an open circuit voltage OCV of the button battery; (3) discharging for 9.052s at a current of 0.6µA; (4) discharging for 0.03s at a current of 1.25mA; (5) discharging for 0.012s at a current of 8mA; (6) discharging for 0.145s at a current of 16µA; (7) discharging for 0.012s at a current of 8mA; (8) discharging for 0.105s at a current of 16µA; (9) discharging for 0.012s at a current of 8mA, and recording the value of the load voltage CCV at this time; and (10) repeating steps (4) to (9) for three times, i.e. completing a 3-frame test lasting for 10s.

The test results are shown in Table 1:

**Table 1**

| | The value (V) of the load voltage CCV at temperature of -40°C at different times | | | |
|---|---|---|---|---|
| | 0h | 5h | 10h | 16h |
| Embodiment 1 | 2.9444 | 2.6403 | 2.4974 | 2.3385 |
| Embodiment 2 | 2.7540 | 2.3911 | 2.2536 | 2.1503 |
| Embodiment 3 | 2.8945 | 2.5131 | 2.3686 | 2.2600 |
| Embodiment 4 | 2.6879 | 2.3630 | 2.2690 | 2.2017 |
| Embodiment 5 | 2.6872 | 2.3866 | 2.2972 | 2.2459 |
| Embodiment 6 | 2.4729 | 2.1740 | 2.0874 | 2.0255 |
| Embodiment 7 | 0 | 0 | 0 | 0 |
| Embodiment 8 | 2.9372 | 2.6294 | 2.4814 | 2.3135 |
| Embodiment 9 | 2.9369 | 2.6338 | 2.4917 | 2.3348 |
| Comparative Embodiment 1 | 2.8767 | 2.1355 | 2.0564 | 1.9766 |
| Comparative Embodiment 2 | 1.9978 | 2.1503 | 2.0624 | 1.9566 |

The following points can be seen from Table 1:
(1) It can be seen from Embodiments 1 to 9 that the button battery provided in the present application has a good pulse voltage performance at temperature as low as -40°C, so that it can be ensured that the battery can still operate normally in an environment of -40°C. As can be seen from Embodiment 6, when the size of the carbon foil is smaller than that of the negative electrode sheet, a part of the surface of the negative electrode sheet reacts with the electrolyte and the positive electrode ions, thereby increasing the resistance of the surface of the battery and the negative electrode sheet, and reducing the low-temperature pulse performance of the obtained button battery. It can be seen from Embodiment 7 that when the size of the carbon foil is larger than the size of the negative electrode sheet, that is, when the diameter of the self-supporting carbon foil is much larger than that of the separator, the self-supporting carbon foil is conductive to cause the positive and negative electrodes of the battery to be in direct contact, and the battery has a significant short circuit phenomenon with the voltage of 0. As such, the pulse test cannot be performed. From Embodiments 4 to 5 and Embodiments 8 to 9, it can be seen that the thickness of the carbon foil affects the low temperature pulse performance of the button battery, while the number of layers of the separator has little effect on the low temperature pulse performance of the button battery.
(2) As can be seen from Embodiment 1 and Comparative Embodiment 1, a composite layer composed of Comparative Embodiment 1 includes a carbon material layer and a non-woven fabric layer. Compared with Embodiment 1, the pulse voltage of the button battery provided by Comparative Embodiment 1 decreases at different times, indicating that the self-supporting carbon foil provided between the negative electrode sheet and the separator in the present application has better low-temperature pulse performance. As can be seen from Embodiment 1 and Comparative Embodiment 2, a carbon foil is not provided on the negative electrode sheet in Comparative Embodiment 2, and the negative electrode sheet reacts with the electrolyte and the positive electrode ion to produce a high-resistance substance. The pulse voltage of the primary battery provided by Comparative Embodiment 2 is significantly lower than that of Embodiment 1.

In summary, the button battery provided by the present application has a simple structure, the problem that the negative electrode sheet reacts with the electrolyte and the positive electrode ion to generate a high-resistance substance can be avoided by providing a carbon foil between the negative electrode sheet and the separator, and the internal resistance of the button battery and the resistance of the surface of the negative electrode sheet are reduced, thereby greatly improving the discharge performance of the button battery under high current and the pulse performance at low temperature.

The above description is only specific embodiments of the present application, but the scope of protection of the present application is not limited thereto. Those skilled in the art should understand that any variations or substitutions readily conceivable by those skilled in the art within the technical scope disclosed in the present application fall within the scope of protection and disclosure of the present application.

## Claims

1. A button battery, wherein the button battery comprises a housing, the housing comprises a bottom cover on a side of a negative electrode sheet and a positive electrode cover on a side of a positive electrode sheet;
the housing comprises the positive electrode sheet, a separator, a carbon foil, and the negative electrode sheet stacked in sequence;
the separator has an inverted U-shape, and both sides of the inverted U-shape are bent toward the positive electrode sheet; and
the button battery is filled with electrolyte.

2. The button battery of claim 1, wherein the carbon foil and the negative electrode sheet have a thickness ratio of (0.08-0.60): 1, preferably (0.08-0.25): 1.

3. The button battery of claim 1, wherein the carbon foil and the negative electrode sheet have a diameter ratio of (0.125-1.05): 1, preferably (0.50-1.05): 1.

4. The button battery of claim 1, wherein an orthographic projection of a center of the carbon foil coincides with an orthographic projection of a center of the negative electrode sheet along a direction perpendicular to the button battery.

5. The button battery of claim 1, wherein an orthographic projection of a center of the negative electrode sheet coincides with an orthographic projection of a center of the bottom cover along a direction perpendicular to the button battery.

6. The button battery of claim 1, wherein the bottom cover is provided with a sealing ring provided at an edge snap position for jointing the bottom cover and the positive electrode cover;
preferably, the separator has more than one layer;
preferably, the negative electrode sheet comprises a lithium negative electrode sheet; and
preferably, the positive electrode sheet comprises a manganese dioxide positive electrode sheet.

7. A manufacturing method of the button battery of claim 1, wherein the manufacturing method comprises:
placing the negative electrode sheet, the carbon foil, and the separator sequentially in the bottom cover; injecting an electrolyte into the bottom cover; placing the positive electrode sheet into the bottom cover; and sealing the bottom cover by the positive electrode cover to obtain the button battery; and
wherein the carbon foil is obtained by mixing a carbon material with a binder and extruding a mixture into a sheet.

8. The manufacturing method of claim 7, wherein orthographic projections of centers of the negative electrode, the carbon foil, the separator, and the positive electrode coincide with an orthographic projection of a center of the bottom cover along a direction perpendicular to the button battery.

9. The manufacturing method of claim 7, wherein an extrusion frequency of the extruding the mixture into the sheet ranges from 30 Hz to 50 Hz.

10. The manufacturing method of claim 7, wherein an extrusion temperature of the extruding the mixture into the sheet ranges from 30°C to 60°C.

11. The manufacturing method of claim 7, wherein the mixing has a revolution speed ranging from 20 r/min to 30 r/min and a rotation speed ranging from 1500 r/min to 2000 r/min; and
preferably, the mixing comprises premixing the carbon material for 3 min to 5 min, and adding the binder and mixing for 5 min to 7 min.

12. The manufacturing method of claim 7, wherein the carbon material and the binder have a mass ratio of 1: (0.01-0.1).

13. The manufacturing method of claim 7, wherein the carbon material comprises any one of or a combination of at least two of graphite, acetylene black, Ketjen black or activated carbon; and
preferably, the binder comprises any one of or a combination of at least two of polyvinylidene fluoride emulsion, polytetrafluoroethylene or sodium carboxymethyl cellulose.

14. The manufacturing method of claim 7, wherein a method of setting the negative electrode sheet comprises: covering a surface of the negative electrode sheet with a layer of polyethylene film, and forming the negative electrode sheet from a square to a circle and placing the negative electrode sheet in the bottom cover, and removing the polyethylene film.

15. The manufacturing method of claim 7, wherein the positive electrode sheet is obtained by primary drying, pressure molding and secondary drying of positive electrode slurry.

16. The manufacturing method of claim 15, wherein a temperature of the primary drying ranges from 170 °C to 190 °C, and a duration of the primary drying ranges from 10 h to 14 h.

17. The manufacturing method of claim 15, wherein a temperature of the secondary drying ranges from 200 °C to 220 °C, and a duration of the secondary drying ranges from 10 h to 14 h;

18. The manufacturing method of claim 15, wherein the positive electrode slurry comprises manganese dioxide, binding material, and conductive material.

19. The manufacturing method of claim 7, comprising:
placing the negative electrode sheet, the carbon foil, and the separator sequentially in the bottom cover, injecting the electrolyte into the bottom cover, placing the positive electrode sheet in the bottom cover, and sealing the bottom cover by the positive electrode cover to obtain the button battery;
wherein the carbon foil is obtained by mixing the carbon material with the binder in a mass ratio of 1: (0.01-0.1) at a revolution speed ranging from 20 r/min to 30 r/min and a rotation speed ranging from 1500 r/min to 2000 r/min, and extruding the mixture into the sheet at an extrusion frequency ranging from 30 Hz to 50 Hz and an extrusion temperature ranging from 30°C to 60°C; and the mixing comprises premixing the carbon material for 3 min to 5 min, and adding the binder and mixing for 5 min to 7 min;
wherein orthographic projections of centers of the negative electrode sheet, the carbon foil, the separator, and the positive electrode sheet coincide with an orthographic projection of a center of the bottom cover along a direction perpendicular to the button battery;
wherein a method of setting the negative electrode sheet comprises: covering a surface of the negative electrode sheet with a layer of polyethylene film, and then forming the negative electrode sheet from a square to a circle and placing the negative electrode sheet in the bottom cover, and removing the polyethylene film; and
wherein the positive electrode sheet is obtained by primary drying the positive electrode slurry at a temperature ranging from 170°C to 190°C for 10 h to 14 h, pressure forming, and secondary drying at a temperature ranging from 200°C to 220°C for 10 h to 14 h, and the positive electrode slurry comprises manganese dioxide, bonding material and conductive material.

20. An electronic device, wherein the electronic device comprises the button battery of claim 1.
